# EUROPEAN PATENT SPECIFICATION

(11) **EP 0 530 127 B1**
(45) Date of publication and mention of the grant of the patent: **18.01.1995**
(21) Application number: 92610062.9
(22) Date of filing: 27.08.1992
(51) Int. Cl.: B62D 51/06

(54) **Machine for soil preparation**
Maschine für die Bodenaufbereitung
Machine pour la préparation du sol

(30) Priority: 30.08.1991 DK 1533/91
(43) Date of publication of application: 03.03.1993
(73) Proprietor: ANDREAS PETERSEN HOEJBY ApS, 5260 Odense S (DK)
(72) Inventor: Hansen, Hans Oestergaard, DK-5270 Odense N (DK)
(74) Representative: Larsen, Hans Ole

(56) References cited:
- FR-A- 1 232 807
- US-A- 3 074 490
- US-A- 4 077 477
- US-A- 4 220 209

## Description

### Background of the invention

The invention relates to a soil preparation machine with a handle with which a person walking behind the machine can operate and control the machine, which is further provided with rotating blades and a lowerable tine or blade and support wheels on each side of the machine to support the machine during operation.

Machines of this kind, which are commonly known as garden cultivators, are particularly widespread among gardners, agriculturists, allotment owners, local administrations etc., where they are used for the cultivation of the soil.

The rotating blades are driven by a petrol engine, which via a clutch and gearing generates a movement so that the rotation of the blades cultivates the soil and drives the machine forwards. It is operated from behind by means of a handle with the necessary controls.

In order to ease the work of controlling the machine, it is provided with a pair of support wheels which are mounted in such a manner that the machine is in balance longitudinally in the direction of movement and also transversely.

The wheels are often mounted in such a way that the distance from the machine can be adjusted, all depending on the desired working depth and the angle of the machine.

Furthermore, the machine can be provided with a harrow tine or blade which is mounted rearmost and is similarly adjustable in depth so that the soil can be loosened to the desired degree.

With the hitherto-known machines of this kind, the adjustment of such tines and wheels is very troublesome and time-consuming. Moreover, tools are often necessary to remove clamping bolts, split-pins, circlips and the like. The work involved is thus relatively difficult, and it is rendered even more inconvenient by the parts often being dirty and even possibly rusted together. Furthermore, during the work of dismantling, the parts can get lost or damaged so that there is also the extra inconvenience of spare parts having to be obtained.

In order to avoid these difficulties, efforts have been made to simplify the means of adjustment.

From the description in US Patent no. 4,164,983, there is known such a machine with wheels and tine built together mounted on a bracket which assumes two positions, namely a lowered position in which the wheels are lowered and the tine is knocked in, and an elevated position in which the wheels are loosened while the tine is lowered. This configuration of the suspension also requires the use of bolts and cotter pins which, as mentioned, are troublesome to handle, especially in cold weather and when the parts are dirty, plus the fact that it is necessary to get under the machine in order to adjust it. Finally, this machine is adjustable only in the above-mentioned two positions.

The tine can thus be adjusted in length so that the working depth can be varied, but also here a clamping ring is used, which must be loosened manually in order for the tine to be raised or lowered, after which the clamping ring must be mounted. This adjustability is also troublesome and requires that the parts be cleaned etc. Moreover, the wheels and the tine are built together in such a manner that an individual adjustment is excluded.

### Advantages of the invention

The soil preparation machine according to the invention, where the wheels are mounted on the legs of a yoke which is housed in a fixture on a rearwardly-extending support piece, so that the yoke can turn around an axis which extends parallel to the axis of rotation of the wheels, and which furthermore can be secured in different angular positions to determine the height of the machine above the soil, and where the tine is secured to the rearmost part of the support piece with means for adjusting its depth in relation to the support piece, has first and foremost the advantage that the wheels alone can be adjusted easily and without effort by turning the suspension in its fixture and securing it in the desired position, and that the tine can separately be adjusted to the desired depth or raised completely free of contact with the earth. It thus becomes very easy to adjust the machine to suit the working conditions and hereby increase its utilization characteristics.

As disclosed in claim 2, by providing the machine with a support piece configured as two rails, the wheel suspension can easily be secured on the outer side of the rail and the tine between the rails. A simple and robust mounting is thus achieved which provides the possibility of an easier adjustment of these parts.

As disclosed in claim 3, by providing the wheel suspension with a cam disk with recesses in which a foot-operated pawl can engage, the wheels can be adjusted completely without the use of tools and without the user having to bend down.

As disclosed in claim 4, by making the pawl spring-loaded, there is security that the engagement is always intact and that the pawl can only move out of engagement against the force of the spring.

As disclosed in claim 5, by providing the rails with a face which takes up the tine's forwardly-directed pressure and a pin through holes in the rails to take up the rearwardly-directed pressure, both stemming from the moment to which the tine is exposed during its movement through the soil, it is a stable fixture which allows easy adjustment of both the angle and the depth via suitable establishing of holes in the rails and recesses along the rear edge of the tine.

Moreover, this adjustability can be undertaken by the user in a slightly bent over position.

As disclosed in claim 6, by configuring the recesses as a partial enclosure of the pin in the working position, the tine is safeguarded against undesired swinging-out of the engagement in its fixture.

Finally, as disclosed in claim 7, it is expedient to place the holes through the rails in such a manner that angular adjustment of the tine in relation to the rails can be varied.

### The drawing

In the following section, an example embodiment of the machine according to the invention will be described with reference to the drawing, where
- fig. 1: shows the machine in perspective,
- fig. 2: shows the wheel suspension and the tine seen from the side,
- fig. 3: shows the wheel suspension seen from the front,
- fig. 4: shows a sectional view of the wheel suspension in the direction IV-IV in fig. 3, and
- fig. 5: shows the tine seen from the side.

### Description of the example embodiment

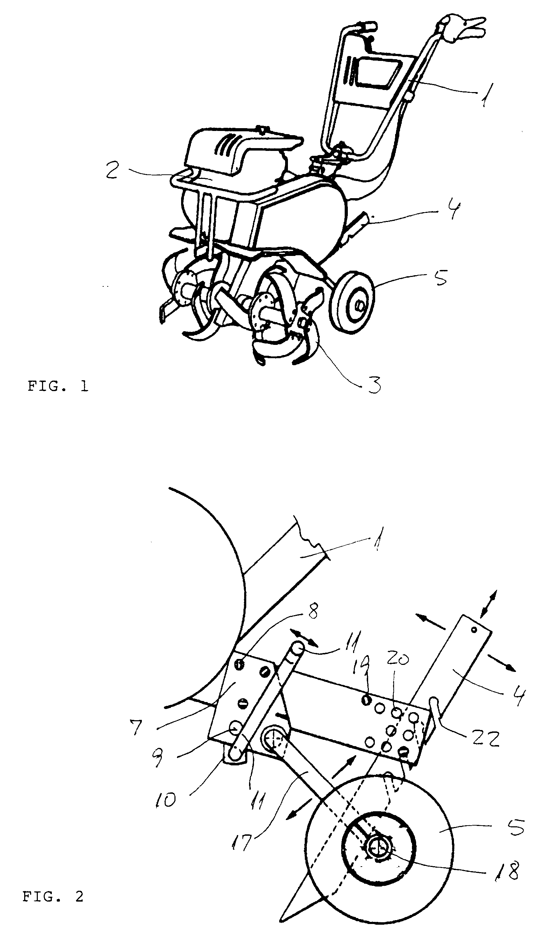

As shown in fig. 1, the soil preparation machine is built up on a frame with a petrol engine 2 which via a V-belt drive and a gearbox can drive a blade arrangement 3. The blades are secured to a common driving shaft.

The frame is also provided with a handle 1 with coupling grip, throttle and gear selector, so that the machine can be operated by a person walking behind it.

Behind the blades 3 there is suspended a pair of support wheels 5 and a tine 4, which parts will be described in more detail in the following.

To the rear of the frame there is secured a support piece 6, as shown in fig. 2. The object of the support piece is to form a fixture for the wheels 5 and a rearwardly-suspended tool, which in the example shown is a downwardly-projecting tine 4. Instead of this tine, other tools such as as a plowshare, a grass conditioner or similar rearwardly-suspended tools can be mounted in a completely corresponding manner.

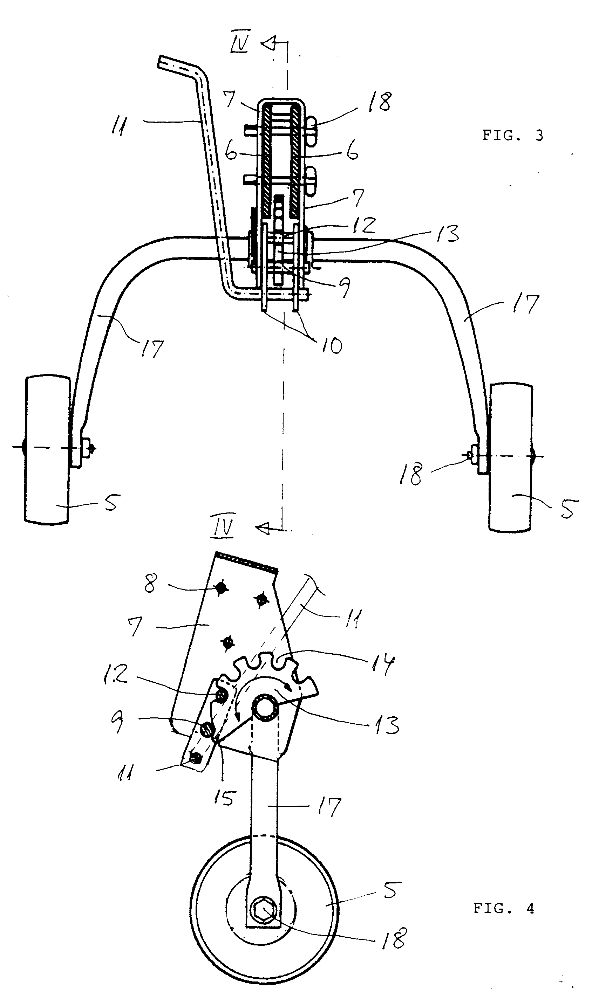

The actual support piece 6 is built up of two rails 6 which extend parallel to each other at a certain mutual distance, as shown in fig. 4. This distance is slightly greater than the thickness of the tine 4.

As shown in figs. 2 and 3, the wheels 5 are secured to the legs of a yoke 17 by means of a commonly-known hub bolt 18.

The centre of the yoke 17 is suspended in a fixture 7 in the form of a bent plate which, as shown in fig. 7, extends along and over the sides of the rail 6. The fixture 7 is bolted firmly to the rails 6 by means of a number of through-going bolts 8.

To the yoke 17 there is secured a disk 13, see figs. 3 and 4, which extends between the rails 6. As shown in fig. 4, the disk is configured as the section of a circle so that its edge has the same radius from the axis of rotation in the yoke in the fixture 7.

The edge of the disk 13 is provided with a number of recesses or grooves 14, and the one end is configured as an outwardly-projecting stop 15.

A pawl 12 is pressed in against this edge, said pawl 12 extending between two rocker arms 10 which are mounted on an axle 9 extending between the opposite sides of the fixture 7.

To tip the pawl 12 out of engagement with the recesses 14, an arm 11 is secured to the bottom part of the arms 10, said arm 11 extending out over the yoke 17 so that it can easily and simply be influenced by the pressure from a foot.

To hold the arms 11 and the pawl 12 in the engaged position, for example as shown in figs. 3 and 4, a spring 16 is secured to the arm so that the pawl is spring-loaded.

The operation of the adjustment mechanism is thus limited to the use of the foot while in the standing position to press the arm 11 a distance forwards, whereby the yoke 17 with the wheels 5 are released for turning in the fixture 7. If the wheels are required to be lowered, the machine is lifted slightly with the handle 1, whereby the wheels will turn downwards. If the wheels 5 are required to be raised, the machine is lowered, whereby the wheels will turn upwards.

When the desired position of the wheels has been reached, the foot is removed from the arm 11, which thereafter is turned by the spring 16 so that the pawl 12 enters into engagement with one of the recesses 14 in the disk 12.

This adjustment of the wheels is very simple, does not demand the use of tools, and it is carried out by the user in the upright position.

At the rearmost end of the support piece 6 there is formed a suspension for a tool, which in the example shown is a harrow tine 4.

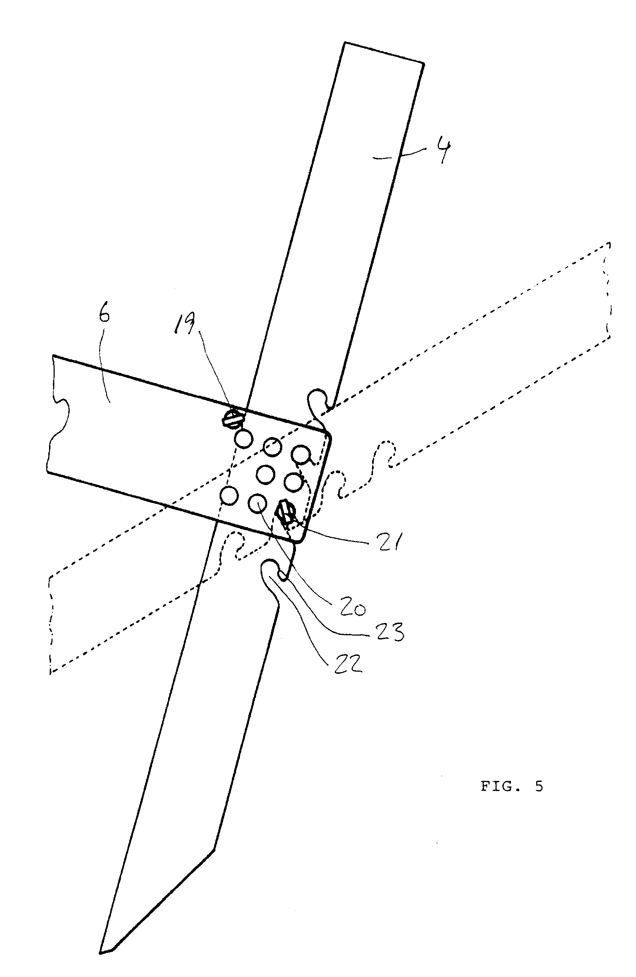

The tine 4 is made from one piece of steel with rectangular cross-section which is pointed at the lower end, and which is provided with recesses 22 along a part of its rear edge, as shown in figs. 2 and 5.

It will be noted that the recesses 22 are formed as slots with rounded ends, and with a narrowing down 23 at the outer end of the slot. This ensures that the tine is suspended effectivly in the position of use.

Through the rails 6 of the support piece there is also mounted a through-going pin 19 which forms a contact face for the front edge of the tine 4. The actual suspension of the tine is effected via a transverse pin 21 which similarly extends through holes 20 arranged in the rails 6. In the example shown in fig. 5, the pin 21 is placed in the rearmost, lower hole, whereby the tine 4 will assume an upright position. By selecting another hole for the pin 21, the tine is able to be adjusted with regard to the angle during the work in the soil.

The adjustment of the working depth of the tine 4 is carried out by selecting a recess 23 for the suspension on the pin 21. When this setting is changed, and herewith the height adjustment, the tine 4 is turned slightly rearwards, as indicated by the stippled lines in fig. 5, and thereafter lifted out of engagement with the pin 21. The tine can now be raised or lowered, and thereafter again led in over the pin in the desired position.

The adjustment of this rearwardly-attached tool is thus easy to carry out, and it demands neither cleaning of the tine nor removal of securing parts such as bolts or cotter pins. Moreover, the adjustment can be carried out in a bent-over position which is convenient for the user.

By means of the suspensions according to the invention, the greatest possible ease of operation and handling of the machine is achieved, in that all adjustments can be effected by the user from the control side and without the need for tools or the dismantling of parts. Furthermore, the user is afforded considerable safety, in that he is not exposed to the risk of injuries during the work of adjustment of the parts.

## Claims

1. Soil preparation machine with a handle (1) with which a person walking behind the machine can operate and control the machine, which is further provided with rotating blades (3) and a lowerable tine or blade and support wheels (5) on each side of the machine to support the machine during operation, **characterized** in that the wheels (5) are mounted on the legs of a yoke (17) which is housed in a fixture (7) on a rearwardly-extending support piece (6), so that the yoke (17) can turn around an axis which extends parallel to the axis of rotation of the wheels (5), and which furthermore can be secured in different angular positions to determine the height of the machine above the soil, and where the tine (4) is secured to the rearmost part of the support piece (6) with means for adjusting its depth in relation to the support piece (6).

2. Soil preparation machine according to claim 1, **characterized** in that the support piece is configured as two parallel-extending rails (6), and where the fixture (7) is secured to the outer side of the rails (6), and the tine (4) is suspended between the rails (6).

3. Soil preparation machine according to claims 1 and 2, **characterized** in that the yoke (17) at the suspension in the fixture (7) is provided with a disk (13) which extends transversely to the axis of rotation and has an outer edge with one or more recesses (14), and in that in the fixture (7) there is disposed an arm (10) with a pawl (12) which can enter into engagement with the recesses (14), said arm (10) being provided with an outwardly-projecting operating arm (11) for the movement of the pawl (12) out of and into engagement with the recesses (14).

4. Soil preparation machine according to claim 3, **characterized** in that the rocker arm (10) is provided with a spring (16) which presses the pawl (12) in towards the edge of the disk (13).

5. Soil preparation machine according to claims 1 and 2, **characterized** in that the rail (6) is provided with a stop-face (19) against which the front edge of the tine (4) can abut, and also a number of through-going holes (20) for a transverse pin (21), and in that the tine (4) is provided with one or more recesses (22) along its rear edge for engagement with the transverse pin (21) when the tine (4) is suspended.

6. Soil preparation machine according to claim 5, **characterized** in that the recesses extend inwards and slope upwards in the formation of a track (22) for the transverse pin (21), said track being narrowed-down (23) at the beginning to form a seating for the transverse pin (21) at the end of the track (22).

7. Soil preparation machine according to claims 5 and 6, **characterized** in that the holes are placed behind the stop-face (19) on the rails (6) so that the angle of the tine (4) in relation to the suport piece (6) can be selected by the positioning of the transverse pin (21) in the holes (20).

## Patentansprüche

1. Maschine für die Bodenaufbereitung,
die einen Handgriff (1) aufweist, mit dem eine hinter der Maschine gehende Person die Maschine betätigen und steuern kann, und
die weiterhin mit sich drehenden Schaufelblättern (3) und einer absenkbaren Zinke bzw. Klinge und mit an jeder Seite der Maschine vorgesehenen Tragrädern (5) zum Tragen der Maschine während der Betätigung vorgesehen ist,
**dadurch gekennzeichnet,**
daß die Räder (5) an den Schenkein eines Bügels (17) angebracht sind, der in einer Festlegeeinrichtung (7) an einem nach hinten ragenden Tragstück (6) untergebracht ist, so daß der Bügel (17) sich um eine Achse drehen kann, die sich parallel zur Drehachse der Räder (5) erstreckt, und der weiterhin unter verschiedenen Winkelstellungen festlegbar ist, um die Höhe der Maschine über dem Erdboden zu bestimmen, und
daß die Zinke (4) an dem hintersten Teil des Tragstückes (6) mit Mitteln zur Einstellung von deren Tiefe in Bezug zu dem Tragstück (6) befestigt ist.

2. Maschine für die Bodenaufbereitung nach Anspruch 1, **dadurch gekennzeichnet,** daß das Tragstück von zwei sich parallel erstreckenden Schienen (6) gebildet ist, die Festlegeeinrichtung (7) an der äußeren Seite der Schienen (6) festgelegt ist und die Zinke (4) zwischen den Schienen (6) nach unten ragend vorgesehen ist.

3. Maschine für die Bodenaufbereitung nach Anspruch 1 und 2, **dadurch gekennzeichnet,** daß der Bügel (17) bei der Aufhängung in der Festlegeeinrichtung (7) mit einer Scheibe (13) versehen ist, die sich quer zur Drehachse erstreckt und eine mit einer oder mehreren Ausnehmungen (14) versehene äußere Kante aufweist, und daß in der Festlegeeinrichtung (7) ein Arm (10) mit einem Sperrhaken (12) angeordnet ist, der in Eingriff mit den Ausnehmungen (14) bringbar ist, und der Arm (10) mit einem nach aufwärts ragenden Betätigungsarm (11) versehen ist, um den Sperrhaken (12) aus dem und in den Eingriff mit den Ausnehmungen (14) zu bewegen.

4. Maschine für die Bodenaufbereitung nach Anspruch 3, **dadurch gekennzeichnet,** daß der Schwenkarm (10) mit einer Feder (16) versehen ist, welche den Sperrhaken (12) gegen die Kante der Scheibe (13) drückt.

5. Maschine für die Bodenaufbereitung nach Anspruch 1 und 2, **dadurch gekennzeichnet,** daß die Schiene (6) mit einer Anschlagfläche (19), gegen die sich die vordere Kante der Zinke (4) anlegen kann, und auch mit einer Anzahl von durchgehenden Löchern (20) für einen Querstift (21) versehen ist, und daß die Zinke (4) entlang ihrer hinteren Kante mit einer oder mehreren Ausnehmungen (22) versehen ist, um mit dem Querstift (21) ineinanderzugreifen, wenn die Zinke (4) aufgehängt ist.

6. Maschine für die Bodenaufbereitung nach Anspruch 5, **dadurch gekennzeichnet,** daß sich die Ausnehmungen nach innen und schräg aufwärts in der Formation einer Bahn (22) für den Querstift (21) erstrecken und die Bahn am Beginn herabgeengt (23) ist, um für den Querstift (21) am Ende der Bahn (22) einen Sitz zu bilden.

7. Maschine für die Bodenaufbereitung nach Anspruch 5 und 6, **dadurch gekennzeichnet,** daß die Löcher an den Schienen (6) hinter der Anschlagfläche (19) angeordnet sind, so daß der Winkel der Zinke (4) relativ zu dem Tragstück (6) durch die Anordnung des Querstiftes (21) in den Löchern (20) auswählbar ist.

## Revendications

1. Machine de préparation du sol comportant un manche (1) avec lequel une personne marchant derrière la machine peut manoeuvrer et commander la machine, qui comporte en outre des lames rotatives (3) et une dent ou lame abaissable ainsi que des roues porteuses (5) placées de chaque côté de la machine pour supporter la machine pendant le fonctionnement, caractérisée en ce que les roues (5) sont montées sur les jambes d'un arceau(17) qui est tenu dans une monture (7) sur un support s'étendant vers l'arrière (6), d'une manière telle que l'arceau (17) peut tourner autour d'un axe qui est parallèle à l'axe de rotation des roues (5), et qui peut en outre être fixé dans différentes positions angulaires pour déterminer la hauteur de la machine au-dessus du sol, et en ce que la dent (4) est fixée à la partie extrême arrière du support (6) par des moyens de réglage de sa profondeur par rapport au support (6).

2. Machine de préparation du sol suivant la revendication 1, caractérisée en ce que le support est sous la forme de deux rails parallèles (6), la monture (7) est fixée au côté extérieur des rails (6) et la dent (4) est suspendue entre les rails (6).

3. Machine de préparation du sol suivant les revendications 1 et 2, caractérisée en ce que l'arceau (17), à l'endroit de la suspension dans la monture (7), porte un disque (13) qui s'étend transversalement à l'axe de rotation et qui présente un bord extérieur comportant un ou plusieurs évidements (14), et en ce que, dans la monture (7), est disposé un bras (10) portant un cliquet (12) qui peut venir en prise dans les évidements (14), ledit bras (10) étant pourvu d'un bras de manoeuvre en saillie vers l'extérieur (11) pour déplacer le cliquet (12) hors des évidements (14) ou en prise dans ces derniers.

4. Machine de préparation du sol suivant la revendication 3, caractérisée en ce que le bras oscillant (10) est pourvu d'un ressort (16) qui presse le cliquet (12) vers le bord du disque (13).

5. Machine de préparation du sol suivant les revendications 1 et 2, caractérisée en ce que le rail (6) comporte une face de butée (19) contre laquelle le bord avant de la dent (4) peut venir en butée, et également un certain nombre de trous traversants(20) pour une goupille transversale (21), et en ce que la dent (4) comporte une ou plusieurs échancrures (22) le long de son bord arrière pour venir en prise avec la goupille transversale(21)lorsque la dent (4) est suspendue.

6. Machine de préparation du sol suivant la revendication 5, caractérisée en ce que les échancrures s'étendent vers l'intérieur et sont inclinées vers le haut de manière à définir un guidage (22) pour la goupille transversale (21), ledit guidage étant rétréci (23) à l'entrée, afin de définir un siège pour la goupille transversale (21) à l'extrémité intérieure du guidage (22).

7. Machine de préparation du sol suivant les revendications 5 et 6, caractérisée en ce que les trous sont placés à l' arrière de la face de butée(19) des rails (6) de sorte qu'on peut choisir l'angle de la dent (4) par rapport au support (6) par le positionnement de la goupille transversale (21) dans les trous (20).
